# EUROPEAN PATENT SPECIFICATION

(11) **EP 4 545 925 B1**
(45) Date of publication and mention of the grant of the patent: **10.12.2025**
(21) Application number: 23306873.3
(22) Date of filing: 27.10.2023
(51) Int. Cl.: G01L 1/18, G01B 7/16, G01L 1/22

(54) **MECHANICALLY STABILIZED, DEFORMABLE MULTILAYER LOAD CELL, A METHOD OF MANUFACTURE THEREOF, AND A CONSTRUCTIVE PART IN COMBINATION THEREWITH**
MECHANISCH STABILISIERTE, VERFORMBARE, MEHRSCHICHTIGE LASTZELLE, VERFAHREN ZUR HERSTELLUNG DAVON UND BAUELEMENT IN KOMBINATION DAMIT
CELLULE DE CHARGE MULTICOUCHE DÉFORMABLE ET MÉCANIQUEMENT STABILISÉE, SON PROCÉDÉ DE FABRICATION ET PIÈCE DE CONSTRUCTION EN COMBINAISON AVEC CELLE-CI

(43) Date of publication of application: 30.04.2025
(73) Proprietor: Bollhoff Otalu S.A.S., 73490 La Ravoire (FR)
(72) Inventor: ROMALA, Julien, 73000 Chambéry (FR); JAMBUT, Jean-François, 73190 Challes-les-Eaux (FR); ROQUES, Alexandre, 73190 Challes-les-Eaux (FR)
(74) Representative: HWP Intellectual Property

(56) References cited:
- EP-A1- 2 184 576
- EP-A1- 2 993 455
- WO-A1-2014/156273
- DE-A1- 4 237 404
- JP-A- 2009 264 976
- US-B2- 6 553 846

## Description

### 1. Field of the invention

The present invention relates to a deformable multilayer load cell for measuring a mechanical load of a constructive part, in particular based on a deformation behavior of the constructive part. Further, the present invention relates to a constructive part in combination with the multilayer load cell as well as to a method of manufacture and installation of the multilayer load cell.

### 2. Background of the invention

Several applications exist to use a strain gauge to sense mechanical stresses in a constructive part. The field of mechanical stresses include pressure, torque, mechanical force which generates a related strain behavior in the stress subjected constructive part.

This strain gauge has a strain sensing element which is attached or adhered to the constructive part to be monitored. When the constructive part is deformed, the electrical resistance of the strain gauge changes dependent on the strain transferred from the part to the strain gauge.

Foil strain gauges are widely used for strain measurements. They are provided including metal sensing elements or sensing elements made of semiconductor materials. The foil strain gauges are directly applied to a constructive part by adhesive or the like. Furthermore, the foil strain gauges are equipped with sensitive wiring to be electrically connected.

The way of applying the foil strain gauge to a constructive part as well as the options to establish electrical connection to the wiring of the foil strain gauge are not suitable for an automated application and connection as used in industrial production.

EP 3 537 129 A2 describes a semiconductor strain gauge which is integrated in a ceramic substrate. To reduce thermal drift of the data acquired by the semiconductor strain gauge, a temperature sensor is integrated in the ceramic substrate. Thereby, the accuracy of the measured results is to be improved.

For mounting the semiconductor strain gauge on a part, a mechanical bridge construction is used. The bridge construction is expensive and sensitive while installing.

US 3,626,256 discloses a strain gauge comprising a film of a high temperature resistant electrically insulative organic resin, specifically polyamide resin, having deposited thereon a piezoresistive semiconductor thin film with electrical leads bonded to the semiconductor film, and a coating of high heat resistant electrically insulative resin over the semiconductor film. Furthermore, such a strain gauge is manufactured by depositing the film of heat resistant organic onto a plate of ceramic, preferably aluminum oxide ceramic, sequentially depositing first the semiconductor film and then the electric lead onto the organic resin and thereafter applying the coating of heat resistant organic resin over the deposited film of semiconductor. As the last step in manufacture suitable electrically insulated metal wires are soldered or otherwise bonded to exposed portions of the deposited electrical leads. Prior to use the strain gauge, i.e., the film of organic resin having the resin coated semiconductor film and electrical leads with associated wires thereon, can be easily peeled from the ceramic plate and suitably bonded to the structural member which is to be measured for strain. However, such a way of installation is not suitable for automatic installation.

WO 2016/009 161 A1 describes a method for applying a force sensor to a body to be monitored. To this end, a reactive viscose adhesive is applied to the body. Thereafter, the strain gauge is placed onto said reactive viscose adhesive. By means of a pressure device, the strain gauge is pushed in the direction of the body to reduce thickness of the reactive viscose layer. By means of the viscose adhesive, the strain gauge is secured to a receiving surface of the body. The proposed method and arrangement include time-consuming steps with a lot handling efforts. Thus, these steps are not qualified to be integrated in automated processes.

EP 3 327 554 A1 describes a multilayer touch input device. It includes a cover to be deformed by an acting touch, a display module mounted on the cover, and a pressure sensing unit. The pressure sensing unit includes a first elastic foam, a pressure sensor disposed on the first elastic foam, and a first adhesive layer disposed between the first elastic foam and the pressure sensor. The display module includes a first and a second polarization layer, intermediate first and second substrate layers and essential liquid crystal layer. The display module is adapted to generate an optical presentation of received signals.

CN 109 341 907 A describes a pressure sensor made of a ceramic substrate in combination with a silicone pressure sensing chip. The ceramic substrate has a bridge configuration including a central groove. The groove serves as a pressure sensing region. Opposite to said groove, a pressure sensing chip is mounted on the substrate surface by an adhesive layer. The groove of the bridge construction may have different shapes to be placed in a deformation sensitive region. The bridge construction is made of a brittle ceramic material. Thus, the material choice requires certain processing care used for individual applications, but not suitable for automated processes.

A semiconductor strain sensor having a strain sensor chip composed of a semiconductor substrate having a piezoresistive element as a strain detection section is described in EP 2 184 576 A1. The semiconductor strain sensor has a stable characteristic for a long period of time and a stable conversion factor of a strain generated in the strain sensor chip corresponding to a strain of an object to be measured, within a strain range of a size to be measured. The strain sensor chip is bonded to a metal base plate with a metal bonding material. The metal base plate has two or four extending members, which protrude from a side of the strain sensor chip for attaching the strain senor chip to the object to be measured. Preferably, a groove is arranged between a metal base plate undersurface area, which corresponds to the bonding area where the strain sensor chip is bonded to the metal base plate, and the undersurfaces of the extending members, and a protruding section sandwiched by the grooves is arranged on the undersurface of the metal base plate.

Further, WO 2014/156273 A1 proposes a join structure that optimizes a join between a base substrate and a sensor chip that has a strain detection unit on a semiconductor substrate, allows strain in an object being measured to be detected with high sensitivity even under high temperatures, and allows accurate sensor output even when subjected to strain for a long period of time. To that end, the dynamic-quantity measurement device has a sensor chip that has, on a semiconductor substrate, a strain detection unit that detects in-plane expansion and contraction, a base substrate, and a wiring part via which an electrode on the sensor chip is wired to the outside. The dynamic-quantity measurement device is also configured such that the bottom surface of the sensor chip, opposite the surface thereof where the strain detection unit is provided, is joined to the top surface of the base substrate with an intermetallic-compound layer and a high-melting-point metal layer interposed therebetween.

Finally, a device for determining deformations of motor vehicle components is described in US 6,553,846 B2. The device for detecting a side impact of a vehicle comprises an acceleration sensor provided in components of the vehicle and controlling a release of a side bag for protecting vehicle occupants, and a sensor for sensing a beginning of a plastic deformation of components provided on the components of the vehicle and reducing a release threshold for activation of the side bag.

It is therefore the problem of the present invention, to provide a load sensor adapted for automated application.

### 3. Summary of the invention

The above problem is solved by a mechanically stabilized, deformable multilayer load cell according to independent claim 1, a constructive part in combination with said mechanically stabilized, deformable multilayer load cell according to claim 7, a method for manufacture the mechanically stabilized, deformable multilayer load cell according to independent claim 8 as well as a method for installation of the multilayer load cell according to claim 11. Further preferred embodiments and developments result from the following description, the drawings as well as the appending claims.

The mechanically stabilized, deformable multilayer load cell is adapted to be fastened to a body so that by means of a deformation of the body, a mechanical force acting upon the body is determinable. The multilayer load cell comprises the following features: a fastening intermediary body having a fastening structure with which the load cell is fastenable, preferably mechanically fastenable, to a constructive part via the fastening intermediary body, a carrier substrate onto which at least one piezoresistive element is applied in an electric circuit, the carrier substrate has the form of a plate, preferably a rectangular plate, and is fastened to the fastening intermediary body by means of an adhesive layer.

The present invention relates to a multilayer sensor element, in particular a load cell. The multilayer load cell is adapted to have at least one piezoresistive element integrated in an electric circuit which are both arranged onto a carrier substrate. The carrier substrate is preferably made of a material which may follow a strain condition of the underlying and supporting fastening intermediary body. Based on this preferred property of the carrier substrate, a strain condition induced by a mechanical loading of the constructive part is transferred via the carrier substrate to the at least one piezoresistive element. The mechanical loading or strain condition acting on the piezoresistive element generates an electrical signal within the piezoresistive element to be transferred by means of the connected electric circuit to an evaluation unit, e. g. a computer.

If the fastening intermediary body is mounted by means of the fastening structure to the constructive part, e. g. a car body or a building skeleton, the fastening intermediary body would follow the strain and/or mechanical stress conditions of the constructive part. As a consequence, the deformation behavior of the constructive part is transferred via the fasting intermediary body and the carrier substrate to the at least one piezoresistive element generating related electrical data. To realize a close and firm contact between the fastening intermediary body and the carrier substrate, a connecting and coupling adhesive layer is arranged therebetween. The above-mentioned fastening structure of the fasting intermediary body preferably realizes a mechanical mounting of the multilayer sensor element to the constructive part. Such mechanical mounting, which can be realized automatically or manually, can be easily integrated in automatic processes. For example, the multilayer sensor element is mounted to the constructive part by screwing, clamping, latching, riveting or the like. **In** comparison to an application of the strain gauge by gluing, the mounting process of the multilayer sensor element is less sensitive and allows for automation.

Furthermore preferred, the fastening intermediary body provides for a mechanical stability based on its material choice and size. Thereby, it is adapted to be handled automatically without damage, e.g. by a robot or the like. According to a preferred embodiment of the present invention, the fastening intermediary body is formed like a plate. The plate is dimension in adaptation to the application environment.

According to a preferred embodiment of the deformable multilayer load cell, at least the piezoresistive element and the corresponding electric circuit are covered by means of a lacquer coat, protecting and isolating against outer influences such as humidity, dirt, mechanical damage, and electric contact.

As a general intention of the present invention, the multilayer load sensor is to be installed automatically. It is furthermore intended, to preferably use the multilayer load sensor in an unfriendly environment, e. g. at a car body, a building construction, or a railway constructing. To guarantee a reliable service life of the multilayer load sensor, the electric circuit part as well as the measuring piezoresistive element are covered by the protecting lacquer coat.

As further preferred, the lacquer coat completely covers the carrier substrate with the at least one piezoresistive element and the adhesive layer and it abuts the fastening intermediary body.

According to the present invention, the at least one piezoresistive element with electric circuit comprises an electrical connecting cable having a plug connector.

Known strain gauges are often applied by gluing and connected by sensitive thin wires. Such wires are most often the reason for mal functioning of the load cell. Thus, according to the invention, the multilayer load cell is equipped with a durable electrical wiring having a plug connector. Further preferred, the plug connector is adapted to accepted standards in the field of application of the multilayer load cell. E. g., if the multilayer load cell is used in the auto mobile sector, the design of the plug connector is preferably adapted to the automobile standards to establish an electrical connection for data transfer and/or energy supply therewith.

According to the invention, the carrier substrate is made of ceramic and has a thickness S in the range of 600 µm > S ≥ 258 µm. According to an additional embodiment of the deformable multilayer load cell, the carrier substrate has a thickness S in the range of 500 µm > S ≥ 258 µm, further preferred 300 µm > S ≥ 258 µm.

The multilayer load cell is mounted to a constructive part to follow a deformation behavior thereof. In order to reduce an energy consumption of the carrier substrate, it has the thickness as in the above given range. Besides the preferred control of the energy consumption of the multilayer load cell based on a thickness adaptation of the carrier substrate, the thickness S of the carrier substrate supports further an adaptation of the deformation behavior of the carrier substrate to the deformation behavior of the constructive part. Since the carrier substrate forms part of the multilayer load cell, the thickness adaptation thereof allows for an adaptation of the deformation behavior of the multilayer load cell. In particular, based on thickness variation as of the carrier substrate, the flexibility of the multilayer load cell may be increased or decreased to follow the deformation behavior of the constructive part to which it is mounted to.

Further preferred, the adhesive layer of the deformable multilayer load cell has a thickness D of 40 µm ± 20 µm, in particular 40 µm ± 10 µm and further preferred of 40 µm ± 5 µm in the cured state of the adhesive layer.

The preferred adhesive layer of the multilayer load cell has a multi-functional structure. The preferred extension of the adhesive layer forms a bonding basis for the carrier substrate to the fastening intermediary body. Preferably, the complete surface of the carrier substrate facing the adhesive layer is received within the adhesive layer. Thereby, a preferred all-over adhesion of the carrier substrate is realized to the fastening intermediary body.

The all-over adhesion, and that the all-over contact between these two layers assures that the carrier substrate bearing the at least one piezoresistive element preferably completely follows the deformation behavior of the underlying fastening intermediary body. Thereby, it is guaranteed that the deformation behavior of the constructive part to be monitored is preferably nearly losslessly transferred to the piezoresistive element for measurement.

As a site effect, the adhesive layer generates a stiffening of the multilayer load cell. It is therefore preferred to use a thickness range of the adhesive layer as suggested above which only minimally reduces the flexibility of the multilayer load cell.

Preferably, the adhesive layer of the deformable multilayer load cell comprises a Young's modulus of 3200 MPa ± 10 %.

To additionally support the preferred functions of the adhesive layer, it has a Young's modulus in the given range. The Young's modulus is a mechanically property of the cured adhesive material. In particular, the above given value range of the Young's modulus represents the tension stiffness of the cured adhesive layer. The Young's modulus is defined as the ratio of the stress applied and the resulting strain in the linear elastic region of the cured adhesive material.

Additionally, the present invention provides a constructive part in combination with a mechanically stabilized, deformable multilayer load cell as described above.

A preferred constructive part represents a subcomponent of a vehicle body, like a motor vehicle, an aircraft, a railway vehicle. It is further preferred to combine the multilayer load cell with building sections to monitor their deformation behavior. This monitoring provides a value information in industrial constructions, like factory floors or bridge structures.

The present invention further discloses a manufacturing method of a mechanically stabilized deformable multilayer load cell according to the above-described embodiments. It comprises the following steps: providing a fastening intermediary body, preferably made of metal, processing a surface of the fastening intermediary body so as to support a hold of an adhesive layer, cleaning the surface of the fastening intermediary body, applying an adhesive layer on the fastening intermediary body and connecting a carrier substrate with at least one piezoresistive element to the fastening intermediary body via the adhesive layer and curing the adhesive layer.

According to a preferred embodiment of the manufacturing method, it has the further step: setting a layer thickness of the adhesive layer.

According to a preferred embodiment of the manufacturing method, it has the further step: applying a lacquer coat onto the at least one piezoresistive element and an electric circuit.

The present invention further discloses an installation method of the mechanically stabilized deformable multilayer load cell according to one of the above described alternatives on a constructive part comprising the following steps: providing the multilayer load cell having the fastening intermediary body and the constructive part, fastening the fastening intermediary body and thereby the multilayer load cell to the constructive part, preferably mechanically, and connecting an electrical connecting cable of the multilayer load cell having a plug connector to a power supply and/or an electronic bus system.

### 4. Short description of the drawings

**In** the following, the present invention will be described in detail based on the drawings. **In** the drawings, the same reference signs denote the same elements and/or components. It shows:
- Figure 1: a schematic sectional view of a preferred embodiment of the inventive mechanically stabilized, deformable multilayer load cell, using a plate as the fastening intermediary body,
- Figure 2: a preferred embodiment of a car body in combination with a preferred embodiment of the inventive mechanically stabilized, deformable multilayer load cell,
- Figure 3: a preferred embodiment of a trailer chassis in combination with a preferred embodiment of the inventive mechanically stabilized, deformable multilayer load cell,
- Figure 4: a preferred embodiment of a chassis of a railway wagon in combination with a preferred embodiment of the inventive mechanically stabilized, deformable multilayer load cell,
- Figure 5: a flowchart of a preferred embodiment of a method to manufacture a preferred embodiment of the inventive mechanically stabilized, deformable multilayer load cell, and
- Figure 6: a flowchart of a preferred embodiment of an installation method of a preferred embodiment of the inventive mechanically stabilized, deformable multilayer load cell.

### 5. Detailed description of preferred embodiments

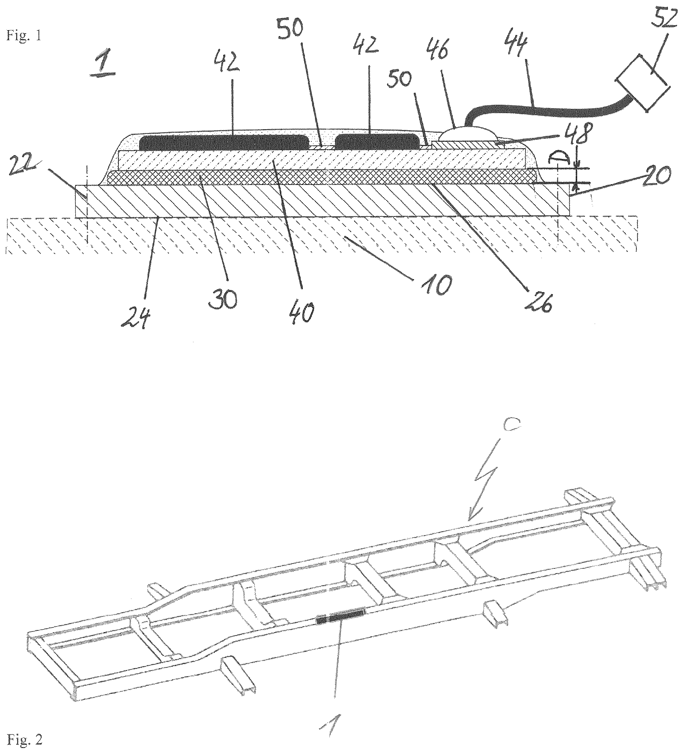

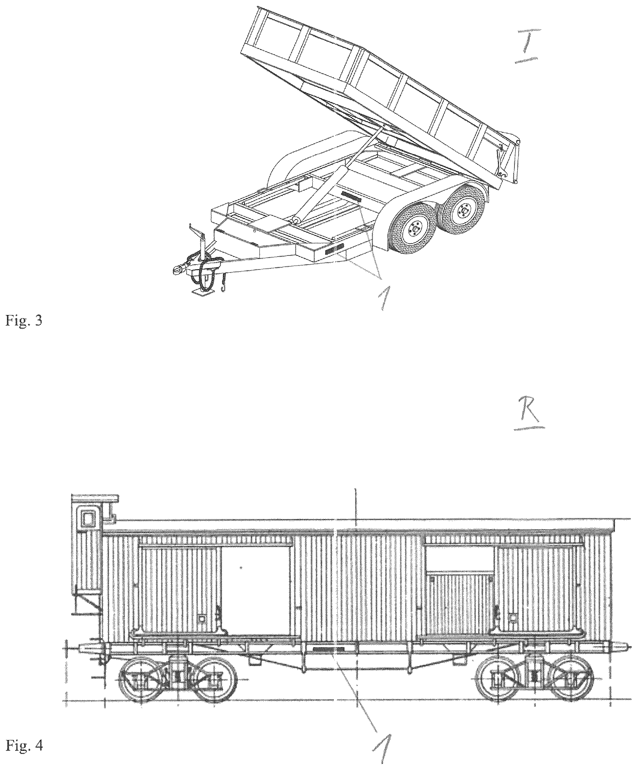

A preferred embodiment of the mechanically stabilized deformable multilayer load cell 1 is schematically shown in a side view in figure 1. It is preferably mounted on a car body C as shown in figure 2, a trailer chassis T as shown in figure 3, or a chassis R of a railway wagon as shown in figure 4, to give a few examples of an application range of the load cell 1. Mounted on the above constructions, the load cell 1 preferably monitors the deformation behavior of the respective constructive part 10. The deformation behavior of the constructive part 10 is induced by mechanical loads acting on the constructive part 10. Such mechanical loads may be based on any acceleration or deceleration situations of the vehicle. Furthermore, they may be generated by a cargo (not shown) put on the vehicle. As known in the art, the deformation behavior is calibrated to represent mechanical loads acting on the constructive part 10.

The mechanically stabilized deformable multilayer load cell 1 as exemplarily shown in figure 1, is formed of several parts put onto each other. The basis of the multilayer load cell 1 is formed by a fastening intermediary body 20 which establishes a reliable connection to the abutting constructive part 10. Preferably, the reliable connection is realized mechanically by means of known fastening elements, like screws, rivets, latching constructions, or the like.

According to a preferred embodiment of the present invention, the fastening intermediary body 20 is formed like a plate. The plate 20 preferably provides a basis for bearing the multilayer structure of the load cell 1 (see below). Additionally, the plate 20 provides a contact basis for abutting a constructive part to which the load cell 1 is to be fastened to. Further, the plate 20 has a known configuration to be mounted on a constructive part 10 by known fastening means. Finally, the plate configuration is easy to handle.

Preferably, the fastening intermediary plate 20 has a certain number of through holes for fastening the multilayer load cell 1 by means of several threaded bolts, rivets, threaded studs and screw nuts or the like to the constructive part 10. Thereby, it is preferably possible to easily change or re-position the load cell 1 during its service life.

As a further preferred embodiment of the fastening intermediary plate 20, it is adapted to be glued or bonded onto the constructive part 10.

After fastening the load cell 1 via the fastening intermediary plate 20 to the constructive part 10, the fastening intermediary plate 20 fulfills several technical functions. Preferably, the fastening intermediary plate 20 realizes a mounting platform of the load cell 1 to the constructive part 10. Thereby, it enables a reliable fastening of the load cell 1 to the constructive part by means of the fastening structure 22. To this end, the fastening structure 22 may be automatically applied to the constructive part 10.

Further preferred, the fastening intermediary plate 20 forms a stable plate, preferably made of metal, to enable an automatic handling of the multilayer load cell 1. To this end, the fastening intermediary plate 20 assures a handling stability of the load cell 1 which is less sensitive as compared to known strain gauges to be glued onto the constructive part 10. As a side effect of the mechanical stabilization of the load cell 1 by the fastening intermediary plate 20, the load cell 1 is preferably protected against excessive deformation while handling and fastening of the load cell 1 to the constructive part 10. To this end, the fastening intermediary plate 20 is made of one integral piece of material, preferably metal.

The fastening intermediary plate 20 is preferably made of metal, like steel or aluminum, or of plastic having similar flexibility as well as mechanical and chemical stability as compared to metal. Based on the material choice, the fastening intermediary plate 20 follows the deformation behavior of the contacting constructive part 10. Additionally, it transfers the deformation behavior of the constructive part 10 preferably nearly free of loss to the remaining load cell structure as described below.

To realize the above preferred functions or at least an individual function thereof, the fastening intermediary plate 20 is made of steel and has a thickness in the preferred range of 0.5 mm to 5 mm.

The fastening intermediary plate 20 has a mounting side 24 which is facing the constructive part 10 after fastening the load cell 1 thereto. Furthermore, it has a bearing side 26 opposed to the mounting side 24 to bear a carrier substrate 40, an adhesive layer 30 holding the carrier substrate 40 and preferably a lacquer coat 70.

The bearing side 26 preferably has a surface structure to support the adherence of the adhesive layer 30 thereto. To this end, the surface of the bearing side 26 is preferably cleaned to remove any residues of its production. This cleaning may be realized chemically as known in the art.

It is further preferred to structure the surface of the bearing side 26 in such a way that it supports adherence of the adhesive layer 30. Such a supporting structure or texturing is preferably realized by laser applications or by milling or by combinations thereof. If the step of surface texturing requires a subsequent cleaning step, this is realized by chemical means and/or by heating the surface and/or by laser treatment of the bearing surface 26.

The carrier substrate 40 as described below is mounted by the adhesive layer 30 to the intermediary plate 20. As a consequence, the adhesive layer 30 preferably directly contacts the bearing side 26 of the fastening intermediary plate 20 and the carrier substrate 40 as described below.

The adhesive layer 30 transfers the deformation behavior of the constructive part 10 to the at least one piezoresistive element 42 of the carrier substrate 40 over the complete service life of the load cell 1. Tests of the service life revealed an advantageous thickness D of the adhesive layer 30 in the amount of D = 40 µm ± 20 µm, in particular D = 40 µm ± 10 µm, and further preferred D = 40 µm ± 5 µm. The above thickness values D refer to the adhesive layer 30 in the cured state. Further preferred, the thickness D refers to the adhesive layer thickness below the carrier substrate 40.

According to a preferred embodiment of the present invention, the adhesive layer 30 is made of an epoxy resin. Further preferred, the epoxy resin has a Young's modulus of 3200 MPa ± 10% in a tensile state. Thus, it denotes a mechanical property of the cured adhesive material that measures the tensile or compressive stiffness when the force is applied lengthwise.

Further preferred, the used adhesive of the adhesive layer 30 has a glass transition temperature above 115 °C. This material property preferably guarantees a stiffness stability of the adhesive layer 30 during use independent of critical temperature variations in the environment of the load cell 1.

According to a preferred embodiment of the material used for the adhesive layer, the epoxy resin is cured by the application of heat or UV light. Comparative tests have shown that the above curing energy generates the best reproducible quality of the adhesive layer 30 if compared to other methods. If the adhesive layer 30 is cured by UV light, the carrier substrate 40 to be mounted therewith is at least partly transparent for light application.

The inventive multilayer load cell 1 further comprises the above-mentioned carrier substrate 40. According to the invention, the carrier substrate 40 is made of ceramic. According to different preferred embodiments of the carrier substrate 40, it is a printed circuit board (PCB) made of aluminum oxide which is also denoted as Al₂0₃ PCB. According to a further preferred embodiment, the carrier substrate 40 is a printed circuit board (PCB) made of aluminum nitride which is also denoted as AlN PCB.

Onto the carrier substrate 40, at least one piezoresistive element 42 is arranged within an electric circuit to determine a change in electrical resistance dependent on the deformation of the multilayer load cell 1. The electric circuit is preferably realized in or on the ceramic printed circuit board of the carrier substrate 40 (see above). The at least one piezoresistive element 42 is connected to the electric circuit of the printed circuit board of the carrier substrate 40. Thereby, the electric circuit realizes the electric power supplied to the at least one piezoresistive element 42. Further, the electric circuit measures a resistance variation or voltage variation or a current variation of the piezoresistive element/elements 42 dependents on the deformation behavior of the carrier substrate 40.

The preferred at least one piezoresistive element 42 realizes a known Wheatstone bridge circuit to gauge the deformation of the constructive part 10. Such a known Wheatstone bridge circuit of a strain gauge technique uses a) a quarter bridge including one piezoresistive element 42, b) a half bridge including two piezoresistive elements 42, c) a double quarter or diagonal bridge including two piezoresistive elements 42, or d) a full bridge including four piezoresistive elements 42.

The above bridge constructions are electrically realized based on the electric circuit integrated in the ceramic printed circuit board of the carrier substrate 40.

Lifetime tests of the deformable multilayer load cell 1 revealed a preferred thickness S of the carrier substrate 40. According to the invention, the thickness S has a range of 600 µm > S ≥ 258 µm, preferably 500 µm > S ≥ 258 µm, and further preferred 300 µm > S ≥ 258 µm. The thickness range is suitable to be picked up and applied to a fully automated production line of the multilayer load cell 1.

**In** order to integrate the preferred multilayer load cell 1 in a control system, e.g. a control system of a motor vehicle or a railway train, the electric circuit including the at least one piezoresistive element 42 has an electric wiring 44. The electric wiring 44 is electrically connected by soldering 46 to the electric circuit of the carrier substrate 40. The soldering 46 is arranged on a preferred soldering pad 48.

The electric circuit is preferably formed by electric tracks 50. According to the invention, the electric wiring 44 comprises a plug connector 52. According to a preferred embodiment of the present invention, the plug connector 52 is adapted to an automobile bus system.

To summarize a preferred manufacture of the carrier substrate 40, the at least one piezoresistive element 42 is directly printed onto the preferred ceramic printed circuit board used as carrier substrate 40. Further preferred, all piezoresistive elements 42 are arranged on one side of the ceramic PCB 40. **In** this context, the piezoresistive elements 42 have the form of monocrystalline or polycrystalline semiconductor strips (unitary semiconductor crystal).

The electric tracks 50 forming the electric circuit connecting the piezoresistive elements 42 are preferably directly printed on the ceramic PCB used as carrier substrate 40. Preferably, the electric tracks 50 connect the piezoresistive elements 42 in the Wheatstone bridge arrangement.

**In** order to protect the carrier substrate 40 having the installed piezoresistive elements 42 and the electric circuit against outer influences, a lacquer coat 70 is applied to the multilayer load cell 1. The preferred lacquer coat70 protects the multilayer load cell 1 from humidity, dirt, mechanical damages and/or electric contact. To this end, the lacquer coat 70 commonly covers the adhesive layer 30, the carrier substrate 40 as well as the piezoresistive elements 42 and the electric circuit with electric tracks 50.

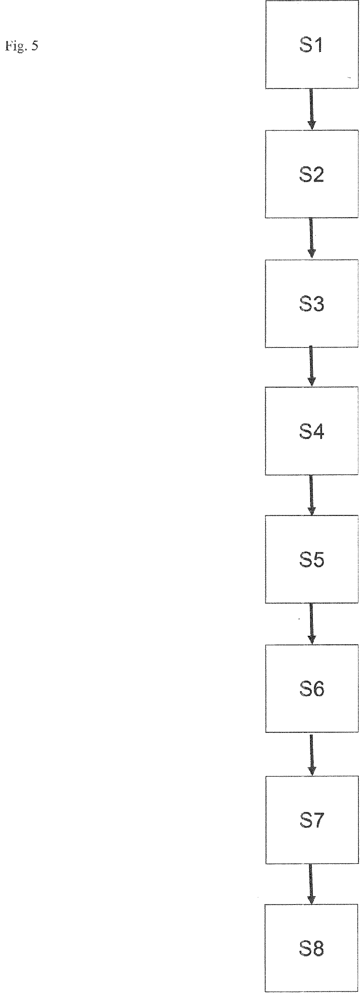

The manufacturing method of the mechanically stabilized deformable multilayer load cell 1 is summarized as follows. It comprises the following steps as illustrated in the flow chart of Fig. 5: providing a fastening intermediary plate 20, preferably made of metal (S1), processing a surface of the fastening intermediary plate 20 so as to support a hold of an adhesive layer 30 (S2), cleaning the surface of the fastening intermediary plate 20 (S3), applying an adhesive layer 30 on the fastening intermediary plate 20 (S4) and connecting a carrier substrate 40 with at least one piezoresistive element 42 to the fastening intermediary plate 20 via the adhesive layer 30 (S6) and curing the adhesive layer 30 (S7).

In order to achieve the above described preferred layer thickness of the adhesive layer 30, the manufacturing method has the further step: setting a layer thickness D of the adhesive layer 30 (S5). For controlling the layer thickness D, it is preferred to use glass pearls between the fastening intermediary plate 20 and the carrier substrate 40.

Further preferred, the known screenprint method is used. The adhesive is applied by means of a hole template (not shown). An excess adhesive is wiped off while the adhesive layer thickness is preferably determined by the thickness of the hole template.

As further preferred, the lacquer coat 70 is applied onto the at least one piezoresistive element 42 and the electric circuit (S8).

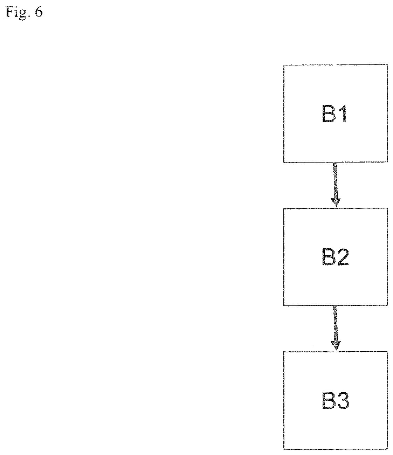

The installation method of the mechanically stabilized deformable multilayer load cell 1 is summarized as follows. To be installed on a constructive part 10, it comprises the following steps: providing the multilayer load cell 1 having the fastening intermediary plate 20 and the constructive part 10 (B1), fastening the fastening intermediary plate 20 and thereby the multilayer load cell 1 to the constructive part 10, preferably mechanically (B2), and connecting an electrical connecting cable 44 of the multilayer load cell 1 having a plug connector 52 to a power supply and/or an electronic bus system (B3). (see Fig. 6)

### 6. List of reference signs

- 1: load cell
- 10: constructive part
- 20: fastening intermediary plate
- 22: fastening structure
- 24: mounting side
- 26: bearing side
- 30: adhesive layer
- 40: carrier substrate
- 42: piezoresistive element
- 44: electric wiring
- 46: soldering
- 48: soldering pad
- 50: electric track
- 52: plug connector
- 70: lacquer coat
- C: car body
- T: trailer chassis
- R: chassis of a railway wagon

## Claims

1. A mechanically stabilized, deformable multilayer load cell (1) adapted to be fastened to a constructive part (10) so that by means of a deformation of the constructive part (10), a mechanical force acting upon the constructive part (10) is determinable, and which comprises the following features:
a fastening intermediary body (20) having a fastening structure (22) with which the load cell (1) is fastenable, preferably mechanically fastenable, to the constructive part (10) via the fastening intermediary body (20),
a carrier substrate (40) onto which at least one piezoresistive element (42) is applied in an electric circuit,
the carrier substrate (40) has the form of a plate, preferably a rectangular plate, and is fastened to the fastening intermediary body (20) by means of an adhesive layer (30), wherein
the at least one piezoresistive element (42) with electric circuit comprises an electrical connecting cable (44) having a plug connector (52), **characterized in that**
the carrier substrate (40) is made of ceramic and has a thickness (S) in the range from 600 µm > S ≥ 258 µm.

2. The deformable multilayer load cell (1) according to claim 1, in which at least the piezoresistive element (42) and the corresponding electric circuit are covered by means of a lacquer coat (70), protecting and isolating against outer influences such as humidity, dirt, mechanical damage and electric contact.

3. The deformable multilayer load cell (1) according to claim 2, in which the lacquer coat (70) completely covers the carrier substrate (40) with the at least one piezoresistive element (42) and the adhesive layer (30) and abuts the fastening intermediary body (20).

4. The deformable multilayer load cell (1) according to one of the preceding claims in which the carrier substrate (40) has a thickness (S) in the range from 500 µm > S ≥ 258 µm, further preferred 300 µm > S ≥ 258 µm.

5. The deformable multilayer load cell (1) according to one of the preceding claims, the adhesive layer (30) of which has a thickness (D) of 40 µm ± 20 µm, in particular 40 µm ± 10 µm and further preferred of 40 µm ± 5 µm in the cured state of the adhesive layer (30).

6. The deformable multilayer load cell (1) according to claim 5, the adhesive layer (30) of which comprises a Young's modulus of 3200 MPa ± 10 %.

7. A constructive part (10) in combination with a mechanically stabilized, deformable multilayer load cell (1) according to any of the preceding claims.

8. A manufacturing method of a mechanically stabilized deformable multilayer load cell (1) according to one of the preceding claims 1 to 6, comprising the following steps:
providing a fastening intermediary body (20), preferably made of metal (S1),
processing a surface of the fastening intermediary body (20) so as to support a hold of an adhesive layer (30) (S2),
cleaning the surface of the fastening intermediary body (20) (S3),
applying an adhesive layer (30) on the fastening intermediary body (20) (S4) and connecting a carrier substrate (40) with at least one piezoresistive element (42) to the fastening intermediary body (20) via the adhesive layer (30) (S6) and
curing the adhesive layer (30) (S7).

9. The manufacturing method according to claim 8 with the further step:
setting a layer thickness (D) of the adhesive layer (30) (S5).

10. The manufacturing method according to claim 8 or 9 with the further step:
applying a lacquer coat (70) onto the at least one piezoresistive element (42) and an electric circuit (S8).

11. An installation method of the mechanically stabilized deformable multilayer load cell (1) according to one of the preceding claims 1 to 6, on a constructive part (10) comprising the following steps:
providing the multilayer load cell (1) having the fastening intermediary body (20) and the constructive part (10) (B1),
fastening the fastening intermediary body (20) and thereby the multilayer load cell (1) to the constructive part (10), preferably mechanically (B2), and
connecting an electrical connecting cable (44) of the multilayer load cell (1) having a plug connector (52) to a power supply and/or an electronic bus system (B3).

## Patentansprüche

1. Eine mechanisch stabilisierte, verformbare mehrschichtige Lastzelle (1), die angepasst ist, um an einem Bauteil (10) befestigt zu werden, sodass mittels einer Verformung des Bauteils (10) eine auf das Bauteil (10) wirkende mechanische Kraft erfassbar ist, und die die folgenden Merkmale aufweist:
einen Befestigungszwischenkörper (20) mit einer Befestigungsstruktur (22), mit der die Lastzelle (1) über den Befestigungszwischenkörper (20) an dem Bauteil (10) befestigbar, vorzugsweise mechanisch befestigbar, ist,
ein Trägersubstrat (40), auf das mindestens ein piezoresistives Element (42) in einem elektrischen Schaltkreis aufgetragen ist,
das Trägersubstrat (40) weist die Form einer Platte auf, vorzugsweise einer rechteckigen Platte, und ist an dem Befestigungszwischenkörper (20) mittels einer Klebschicht (30) befestigt, wobei
das mindestens eine piezoresistive Element (42) mit elektrischem Schaltkreis ein elektrisches Verbindungskabel (44) umfasst, das einen Steckverbinder (52) aufweist, **dadurch gekennzeichnet, dass**
das Trägersubstrat (40) aus Keramik besteht und eine Dicke (S) im Bereich von 600 µm > S ≥ 258 µm aufweist.

2. Die verformbare mehrschichtige Lastzelle (1) gemäß Anspruch 1, bei der mindestens das piezoresistive Element (42) und der entsprechende elektrische Schaltkreis mittels einer Lackbeschichtung (70) bedeckt sind, die es vor äußeren Einflüssen wie Feuchtigkeit, Schmutz, mechanische Schäden und elektrischem Kontakt schützt und isoliert.

3. Die verformbare mehrschichtige Lastzelle (1) gemäß Anspruch 2, bei der die Lackbeschichtung (70) das Trägersubstrat (40) mit dem mindestens einen piezoresistiven Element (42) und der Klebschicht (30) komplett abdeckt und an dem Befestigungszwischenkörper (20) anliegt.

4. Die verformbare mehrschichtige Lastzelle (1) gemäß einem der vorhergehenden Ansprüche, bei der das Trägersubstrat (40) eine Dicke (S) in dem Bereich von 500 µm > S ≥ 258 µm, weiter bevorzugt 300 µm > S ≥ 258 µm, aufweist.

5. Die verformbare mehrschichtige Lastzelle (1) gemäß einem der vorhergehenden Ansprüche, deren Klebschicht (30) eine Dicke (D) von 40 µm ± 20 µm, insbesondere 40 µm ± 10 µm und weiter bevorzugt 40 µm ± 5 µm in dem gehärteten Zustand der Klebschicht (30) aufweist.

6. Die verformbare mehrschichtige Lastzelle (1) gemäß Anspruch 5, deren Klebschicht (30) ein Elastizitätsmodul von 3200 MPa ± 10 % aufweist.

7. Ein Bauteil (10) in Kombination mit einer mechanisch stabilisierten, verformbaren mehrschichtigen Lastzelle (1) gemäß einem der vorhergehenden Ansprüche.

8. Ein Herstellungsverfahren einer mechanisch stabilisierten, verformbaren, mehrschichtigen Lastzelle (1) gemäß einem der Ansprüche 1 bis 6, umfassend die folgenden Schritte:
Bereitstellen eines Befestigungszwischenkörpers (20), vorzugsweise aus Metall (S1),
Bearbeiten einer Oberfläche des Befestigungszwischenkörpers (20), um einen Halt einer Klebschicht (30) zu unterstützen (S2),
Reinigen der Oberfläche des Befestigungszwischenkörpers (20) (S3),
Auftragen einer Klebschicht (30) auf den Befestigungszwischenkörper (20) (S4) und Verbinden eines Trägersubstrats (40) mit mindestens einem piezoresistiven Element (42) mit dem Befestigungszwischenkörper (20) über die Klebschicht (30) (S6) und
Aushärten der Klebschicht (30) (S7).

9. Das Herstellungsverfahren gemäß Anspruch 8 mit dem weiteren Schritt:
Einstellen einer Schichtdicke (D) der Klebschicht (30) (S5).

10. Das Herstellungsverfahren gemäß Anspruch 8 oder 9 mit dem weiteren Schritt:
Auftragen einer Lackbeschichtung (70) auf das mindestens eine piezoresistive Element (42) und einen elektrischen Schaltkreis (S8).

11. Ein Installationsverfahren der mechanisch stabilisierten, verformbaren mehrschichtigen Lastzelle (1) gemäß einem der vorhergehenden Ansprüche 1 bis 6 auf ein Bauteil (10) umfassend die folgenden Schritte:
Bereitstellen der mehrschichtigen Lastzelle (1), die den Befestigungszwischenkörper (20) und das Bauteil (10) aufweist (B1),
Befestigen des Befestigungszwischenkörpers (20) und dadurch der mehrschichtigen Lastzelle (1) an dem Bauteil (10), vorzugsweise mechanisch (B2), und
Verbinden eines elektrischen Verbindungskabels (44) der mehrschichtigen Lastzelle (1), das einen Steckverbinder (52) aufweist, mit einer Stromversorgung und/oder einem elektronischen Bus-System (B3).

## Revendications

1. Cellule de charge multicouche déformable mécaniquement stabilisée (1), adaptée pour être fixée à une pièce de construction (10) de telle façon qu'une déformation de la pièce de construction (10) permet de déterminer une force mécanique agissant sur la pièce de construction (10), et laquelle comprend les caractéristiques suivantes :
un corps intermédiaire de fixation (20) comportant une structure de fixation (22) avec laquelle la cellule de charge (1) peut être fixée, de préférence fixée mécaniquement, à la pièce de construction (10) par le biais du corps intermédiaire de fixation (20),
un substrat de support (40) sur lequel au moins un élément piézorésistif (42) est appliqué dans un circuit électrique,
le substrat de support (40) présente la forme d'une plaque, de préférence une plaque rectangulaire, et est fixé au corps intermédiaire de fixation (20) au moyen d'une couche adhésive (30), dans laquelle
l'au moins un élément piézorésistif (42) avec le circuit électrique comprend un câble de connexion électrique (44) comportant un connecteur enfichable (52), **caractérisée en ce que**
le substrat de support (40) est constitué de céramique et présente une épaisseur (S) dans la plage de 600 µm > S ≥ 258 µm.

2. Cellule de charge multicouche déformable (1) selon la revendication 1, dans laquelle au moins l'élément piézorésistif (42) et le circuit électrique correspondant sont recouverts au moyen d'une couche de laque (70) protégeant et isolant contre des influences extérieures telles que l'humidité, la saleté, les dommages mécaniques et le contact électrique.

3. Cellule de charge multicouche déformable (1) selon la revendication 2, dans laquelle la couche de laque (70) recouvre entièrement le substrat de support (40) avec l'au moins un élément piézorésistif (42) et la couche adhésive (30) et bute contre le corps intermédiaire de fixation (20).

4. Cellule de charge multicouche déformable (1) selon l'une des revendications précédentes, dans laquelle le substrat de support (40) présente une épaisseur (S) dans la plage de 500 µm > S ≥ 258 µm, plus préférentiellement de 300 µm > S ≥ 258 µm.

5. Cellule de charge multicouche déformable (1) selon l'une des revendications précédentes, dont la couche adhésive (30) présente une épaisseur (D) de 40 µm ± 20 µm, en particulier de 40 µm ± 10 µm et plus préférentiellement de 40 µm ± 5 µm dans l'état durci de la couche adhésive (30).

6. Cellule de charge multicouche déformable (1) selon la revendication 5, dont la couche adhésive (30) comprend un module de Young de 3200 MPa ± 10 %.

7. Pièce de construction (10) en combinaison avec une cellule de charge multicouche déformable mécaniquement stabilisée (1) selon l'une quelconque des revendications précédentes.

8. Procédé de fabrication d'une cellule de charge multicouche déformable mécaniquement stabilisée (1) selon l'une des revendications précédentes 1 à 6, comprenant les étapes suivantes :
mise à disposition d'un corps intermédiaire de fixation (20), de préférence constitué de métal (S1),
traitement d'une surface du corps intermédiaire de fixation (20) de manière à supporter une prise d'une couche adhésive (30) (S2),
nettoyage de la surface du corps intermédiaire de fixation (20) (S3),
application d'une couche adhésive (30) sur le corps intermédiaire de fixation (20) (S4) et assemblage d'un substrat de support (40) doté d'au moins un élément piézorésistif (42) avec le corps intermédiaire de fixation (20) par le biais de la couche adhésive (30) (S6) et
durcissement de la couche adhésive (30) (S7).

9. Procédé de fabrication selon la revendication 8, comprenant l'étape suivante :
définition d'une épaisseur de couche (D) de la couche adhésive (30) (S5).

10. Procédé de fabrication selon la revendication 8 ou 9, comprenant l'étape suivante :
application d'une couche de laque (70) sur l'au moins un élément piézorésistif (42) et un circuit électrique (S8).

11. Procédé d'installation de la cellule de charge multicouche déformable mécaniquement stabilisée (1) selon l'une des revendications précédentes 1 à 6 sur une pièce de construction (10), comprenant les étapes suivantes :
mise à disposition de la cellule de charge multicouche (1) comportant le corps intermédiaire de fixation (20) et la pièce de construction (10) (B1),
fixation du corps intermédiaire de fixation (20) et par conséquent de la cellule de charge multicouche (1) à la pièce de construction (10), de préférence mécaniquement (B2), et
connexion d'un câble de connexion électrique (44) de la cellule de charge multicouche (1) comportant un connecteur enfichable (52) à une source d'énergie et/ou à un système de bus électronique (B3).
